# EUROPEAN PATENT APPLICATION

(11) **EP 1 400 836 A1**
(43) Date of publication of application: **24.03.2004**
(21) Application number: 03290989.7
(22) Date of filing: 23.04.2003
(51) Int. Cl.: G02F 1/025

(54) **Waveguide-type semiconductor optical device and process of fabricating the same**

(30) Priority: 17.09.2002 JP 2002269829
(71) Applicant: MITSUBISHI DENKI KABUSHIKI KAISHA, Tokyo 100-8310 (JP)
(72) Inventor: Miyazaki, Yasunori c/oMitsubishi Denki, Chiyoda-ku Tokyo 100-8310 (JP); Tada, Hitoshi c/oMitsubishi Denki, Chiyoda-ku Tokyo 100-8310 (JP); Hanamaki, Yoshihiko c/oMitsubishi Denki, Chiyoda-ku Tokyo 100-8310 (JP)
(74) Representative: Burbaud, Eric

(57) **Abstract**

A waveguide-type semiconductor optical device (20) having a pin-type junction formed on a semi-insulating substrate (1) by a metal-organic vapor phase epitaxial growth process (MOVPE). The pin-type junction consists of an n-type cladding layer (2), an i-type absorption layer (4), and a p-type cladding layer (6). The waveguide-type semiconductor optical device has an impurity concentration not higher than 10¹⁶ cm⁻³ in the i-type absorption layer.

## Description

### BACKGROUND OF THE INVENTION

### 1. Field of the Invention

The present invention relates to a waveguide-type semiconductor optical device used in an optical communication system and, more particularly, to an electroabsorption optical modulator (EA modulator) having a pin-type junction.

### 2. Description of the Background Art

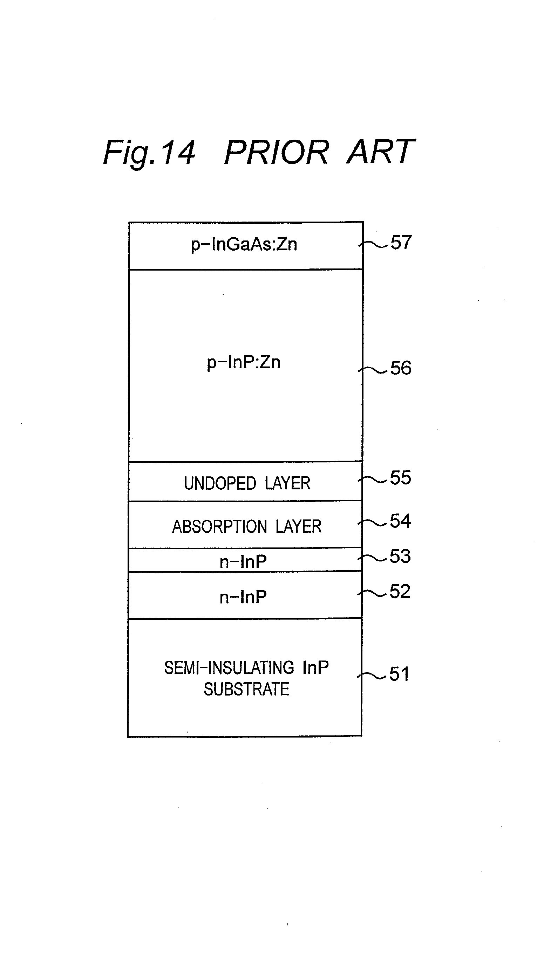

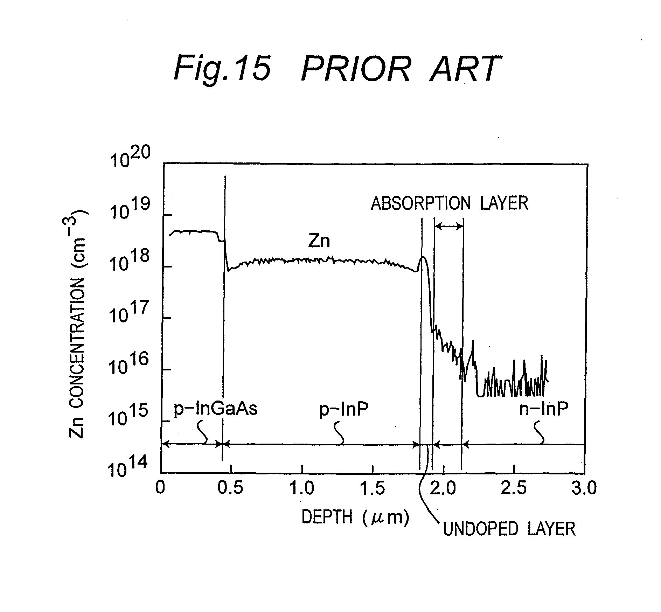

In order to realize a super high-speed optical communication system, a waveguide-type semiconductor optical device having excellent response is used, such as an electroabsorption optical modulator or an optical switch, like. Fig. 14 is a schematic sectional view of a layer structure in an optical modulation area including an absorption layer of a conventional optical modulator, and Fig. 15 shows graph of a concentration distribution of zinc from the surface of the layer structure in a direction of depth. This optical modulator has a layer structure having a pin-type junction. This optical modulator, as shown in Fig. 14, n-type InP cladding layers 52 and 53, an i-type absorption layer 54, an undoped layer 55, a p-type InP cladding layer 56, and a p-type InGaAs contact layer 57 are sequentially formed on a semi-insulating InP substrate 51. Sulfur (S) is used as an n-type dopant (donor) included in the n-type InP cladding layer, and zinc is used as a p-type dopant (acceptor) included in the p-type InP cladding layer 56 and a p-type InGaAs contact layer 57. No impurity is added to the i-type absorption layer 54. In this optical modulator, since an absorption coefficient of the i-type absorption layer 54 changes when an electric field is applied in a direction perpendicular to the layer of the absorption layer 54, light intensity of the light guided through the absorption layer is modulated.

Japanese Laid-open Patent Publication No.9-64459 is related to a semiconductor device having a pin-type junction. In this semiconductor device, a multiple quantum well absorption layer, a Be-doped p-type InP cladding layer, and a Be- and Zn-doped p-type InGaAs contact layer are sequentially stacked on an n-type InP substrate.

According to the study of diffusion of zinc into absorption layer (M. Yamada, P.K. Tien, R.J. Martin, R.E. Nahory, and A.A. Ballman, Appl. Phys. Lett. Vol. 43, (1983), p594), diffusion of zinc into an absorption layer is based on a compositive reasons caused by generation of holes of phosphorus in a crystal and diffusion of zinc into the holes. When a device including a pin-type junction is fabricated by a metal-organic vapor phase epitaxial growth process, the holes of phosphorous are easily generated due to the fabricating process, and it is difficult to avoid diffusion of zinc into the absorption layer.

### SUMMARY OF THE INVENTION

It is an object of the present invention to provide a waveguide-type semiconductor optical device including a pin-type junction which can obtain a preferable extinction ratio.

In accordance with one aspect of the present invention, there is provided a waveguide-type semiconductor optical device having a pin-type junction formed on a semi-insulating substrate. The pin-type junction consists of an n-type cladding layer, an i-type absorption layer, and a p-type cladding layer. The waveguide-type semiconductor optical device includes an impurity concentration of not higher than 10¹⁶ cm⁻³ in the i-type absorption layer.

In another aspect of the present invention, there is provided a process of fabricating a waveguide-type semiconductor optical device having a pin-type junction. The process includes preparing a semi-insulating substrate, and forming a pin-type junction including an n-type cladding layer, an i-type absorption layer, and a p-type cladding layer on the semi-insulating substrate by a metal-organic vapor phase epitaxial growth process. A p-type dopant having a diffusion coefficient smaller than that of zinc is used as a p-type dopant included in the p-type cladding layer.

### BRIEF DESCRIPTION OF THE DRAWINGS

The present invention will become readily understood from the following description of preferred embodiments thereof made with reference to the accompanying drawings, in which like parts are designated by like reference numeral and in which:
Fig. 1 is a perspective view of the configuration of an optical modulator according to the first embodiment of the present invention;
Fig. 2 is a sectional view along an A - A' line in Fig. 1;
Fig. 3 is a schematic sectional view of the structure in a direction of depth in a modulation area of the optical modulator according to the first embodiment of the present invention;
Fig. 4 is a graph of a measurement result of a beryllium concentration distribution in a direction of depth in the modulation area of the optical modulator according to the first embodiment of the present invention;
Fig. 5 is a graph of a calculation result of an electric field distribution in an absorption layer of a conventional optical modulator;
Fig. 6 is a graph of a calculation result of an electric field distribution in an absorption layer of the optical modulator according to the first embodiment of the present invention;
Fig. 7 is a graph of extinction ratios in case of Zn doping and in case of Be doping;
Fig. 8 is a graph of a relationship between a voltage and an optical output when an impurity concentration of an absorption layer is 3 x 10¹⁵ cm⁻³ ;
Fig. 9 is a graph of a relationship between a voltage and an optical output when an impurity concentration of an absorption layer is 3 x 10¹⁶ cm⁻³ ;
Figs. 10A to 10C are perspective views of the process in fabricating an optical modulator according to the first embodiment of the present invention;
Fig. 11 is a schematic sectional view of the structure in a direction of depth in an optical modulation area of the optical modulator according to the second embodiment of the present invention;
Fig. 12 is a graph of a measurement result of a beryllium concentration distribution in a direction of depth in the optical modulation area of the optical modulator according to the second embodiment of the present invention;
Fig. 13 is a graph of a measurement result of a zinc concentration distribution in a direction of depth in the optical modulation area of the optical modulator according to the second embodiment of the present invention;
Fig. 14 is a schematic sectional view of a structure in a direction of depth in a modulation area of a conventional optical modulator; and
Fig. 15 is a graph of a measurement result of a zinc concentration distribution in the direction of depth in the modulation area of the conventional optical modulator.

### DESCRIPTION OF THE PREFERRED EMBODIMENTS

Waveguide-type semiconductor optical devices according to embodiments of the present invention will be described below with reference to the accompanying drawings. The same reference numerals as in the drawings denote the same parts in the drawings.

We found the following problems in a conventional optical modulator. The conventional optical modulator used zinc as a p-type dopant. For this reason, as shown in Fig. 14, zinc is diffused from the p-type InP cladding layer 56 into the i-type absorption layer 54. We think that the i-type absorption layer 54 has a zinc concentration which exceeds 10¹⁶ cm⁻³ throughout the i-type absorption layer 54. When the concentration of an impurity diffused into the i-type absorption layer 54 is higher than 10¹⁶ cm⁻³, electric field applied to the i-type absorption layer 54 is not considerably uniform, extinction ratio characteristic of the i-type absorption layer 54 are deteriorated at large. Then, until now, it is not reported that the diffused impurity concentration can be suppressed to 10¹⁶ cm⁻³ or lower in the p/i junction interface.

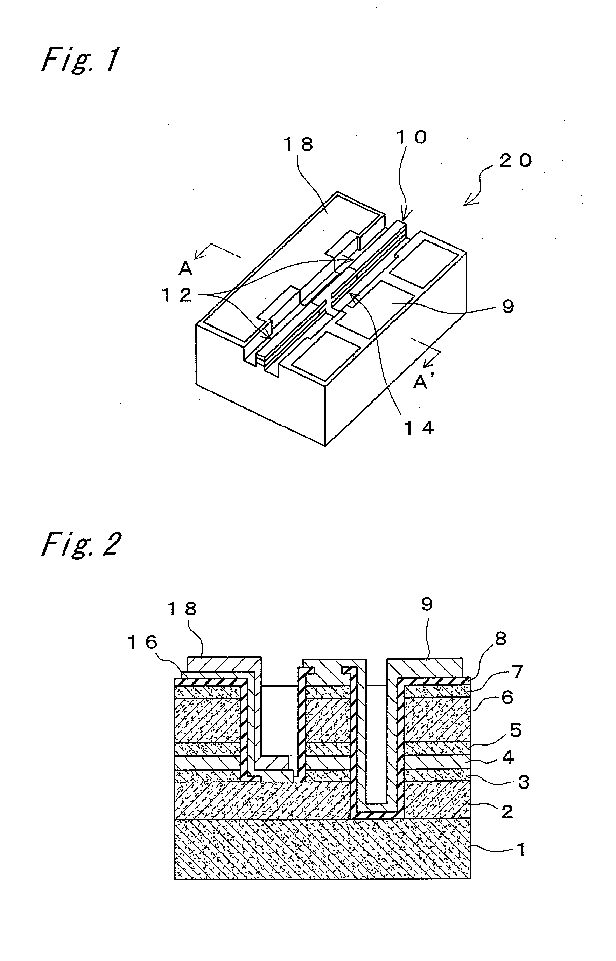

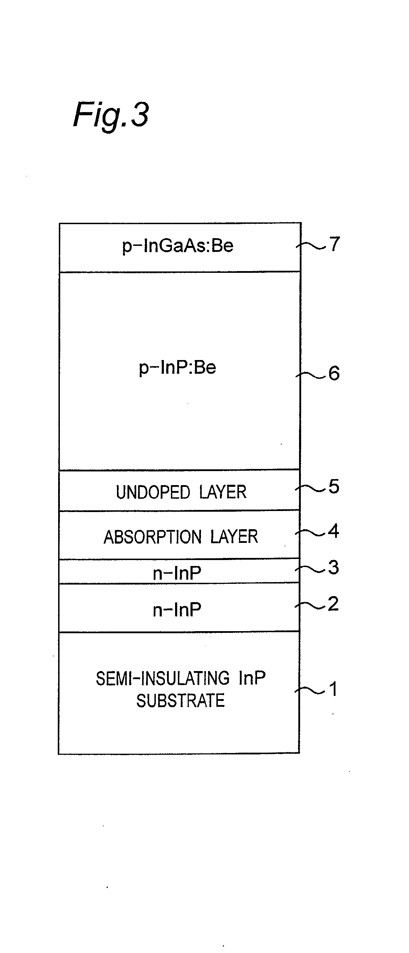

A waveguide-type semiconductor optical device according to the first embodiment of the present invention will be described below with reference to Figs. 1 to 10. Fig. 1 is a perspective view of an appearance of an optical modulator 20 serving as a waveguide-type semiconductor optical device. This optical modulator 20 is an electric field absorption type optical modulator having a pin-type junction. This optical modulator comprises the waveguide mesa 10, and the waveguide mesa 10 has a projecting portion which is superposed between two parallel grooves and extends parallel to one optical axis. The waveguide mesa 10 includes two low-loss waveguide units 12 having the same optical axis and an optical modulation area 14 interposed between the two low-loss waveguide units 12 and having the same optical axis as described above. External light is waveguided to the optical modulation area 14 through the low-loss waveguide units 12 and optically modulated. The low-loss waveguide unit 12 includes a low-loss waveguide 22 and an undoped layer 24. The optical modulation area 14 has a layer structure including a pin-type junction consisting of n-type cladding layers 2 and 3, an i-type absorption layer 4, and a p-type cladding layer 6. In the layer structure of the optical modulation area 14, the n-type cladding layers 2 and 3, the i-type absorption layer 4, an undoped layer 5, the p-type cladding layer 6, a p-type InGaAs contact layer 7, and a p-type side electrode 9 are sequentially stacked on a semi-insulating InP substrate 1. As an n-type dopant included in the n-type cladding layers 2 and 3, sulfur (S) is used. As a p-type dopant included in the p-type cladding layer 6 and the p-type InGaAs contact layer 7, beryllium is used. No impurity is added when the i-type absorption layer 4 is formed. In this optical modulator 20, since beryllium which has a diffusion coefficient lower than that of zinc is used as a p-type dopant added to the p-type cladding layer 6, the concentration of beryllium in the i-type absorption layer 4 can be suppressed to 10¹⁶ cm⁻³ or less.

An electrode structure for applying an electric field for the optical modulator 20 will be described below with reference to the sectional view in Fig. 2. The p-type InGaAs contact layer 7 is connected to the p-type side electrode 9 through the first groove of the two grooves which interpose the waveguide mesa 10. In the first groove, layers up to the n-type cladding layer 2 are removed from the upper surface of the p-type InGaAs contact layer 7. The semi-insulating InP substrate 1 is exposed to the bottom portion of the first groove. The side and bottom surfaces of the first groove are covered with an insulating layer 8. The p-type InGaAs contact layer 7 at the top of the waveguide mesa 10 is connected to the p-type side electrode 9 by an electrode member formed over the upper surface of the insulating layer 8 in the first groove. On the other hand, the n-type cladding layer 2 is connected to an n-type side electrode 18 through the second groove of the two grooves which interpose the waveguide mesa 10. In the second groove, layers up to the n-type cladding layer 3 are removed from the upper surface of the p-type InGaAs contact layer 7. The n-type cladding layer 2 is exposed to the bottom portion of the second groove. The side surfaces of the second groove are covered with the insulating layer 8. The n-type InP cladding layer exposed to the bottom portion of the groove is connected to the n-type side electrode 18 by an electrode member 16 formed over the insulating layer in the second groove. A voltage is applied across the p-type side electrode 9 and the n-type side electrode 18 to make it possible to modulate the intensity of light waveguided through the i-type absorption layer 4.

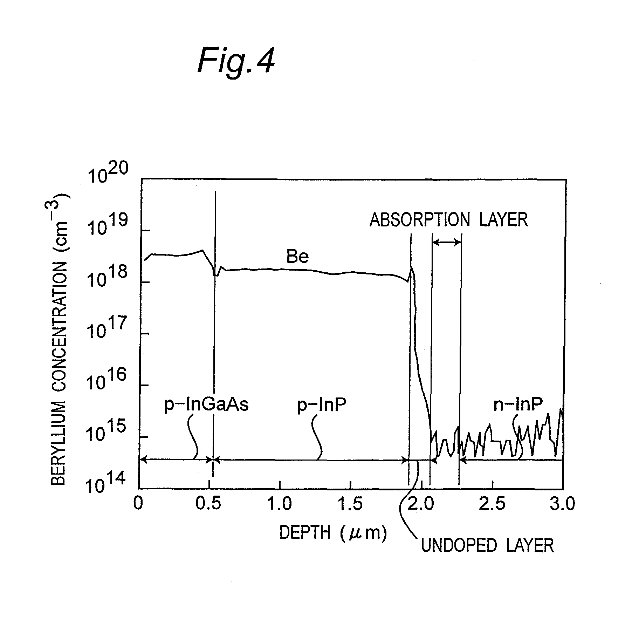

Fig. 4 is a graph of a measurement result of a concentration distribution of beryllium extending in a direction of depth in the optical modulation area 14 of the optical modulator 20. The abscissa of the graph indicates a depth from the surface of the p-type InGaAs contact layer 7, and the ordinate indicates a concentration of beryllium. A section perpendicular to the direction of depth was cut, and the concentration of beryllium in the section was measured by using the secondary ion mass spectrometry (SIMS). As shown in Fig. 4, the beryllium concentration is 10¹⁶ cm⁻³ or less throughout the i-type absorption layer 4.

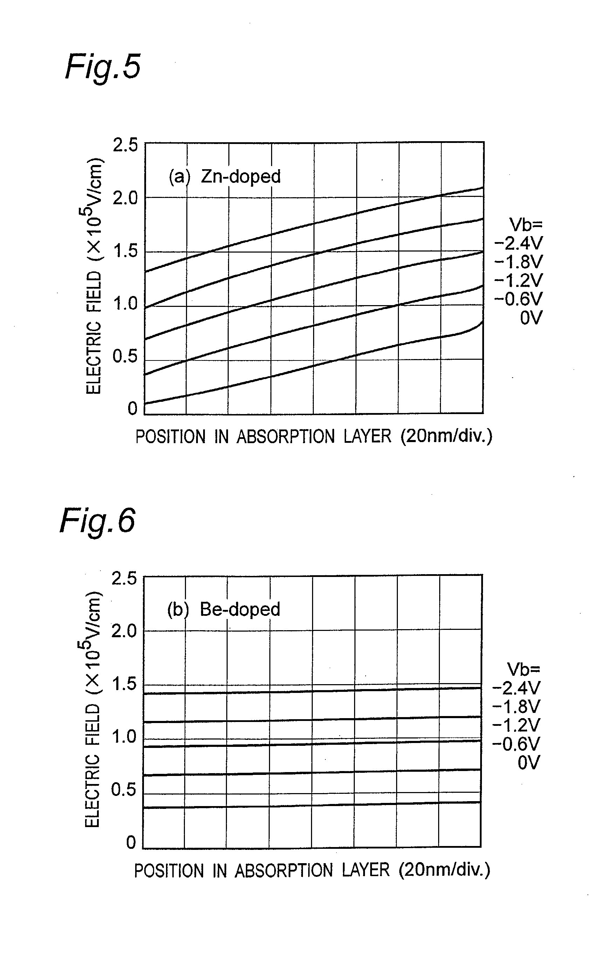

Fig. 5 is a graph of a calculation value of an electric field distribution in an i-type absorption layer 54 of a conventional optical modulator. Fig. 6 is a graph of a calculation value of an electric field distribution in an absorption layer 4 of this optical modulator. The abscissa of the graph indicates a position in the i-type absorption layer 4, and the ordinate indicates a magnitude of the electric field. In the optical modulator 20, the calculation value of the electric field distribution is calculated by solving Poisson's equation from the concentration distribution of beryllium in the i-type absorption layer 4. In a conventional optical modulator 70, an electric field distribution is calculated from a concentration distribution of zinc in the absorption layer 54. In the conventional optical modulator, since zinc having a large diffusion coefficient is added as a p-type dopant, as shown in Fig. 18, zinc is diffused at a concentration of 10¹⁶ cm⁻³ or higher in the absorption layer 54. For this reason, it is considered that large non-uniformity is generated in the electric field distribution in the absorption layer. On the other hand in the optical modulator 20, since beryllium having a diffusion coefficient smaller than that of zinc is included as a p-type dopant, the dopant concentration in the absorption layer 4 can be made 10¹⁶ cm⁻³ or lower. For this reason, non-uniformity of the electric field distribution in the absorption layer 4 can be negligibly small.

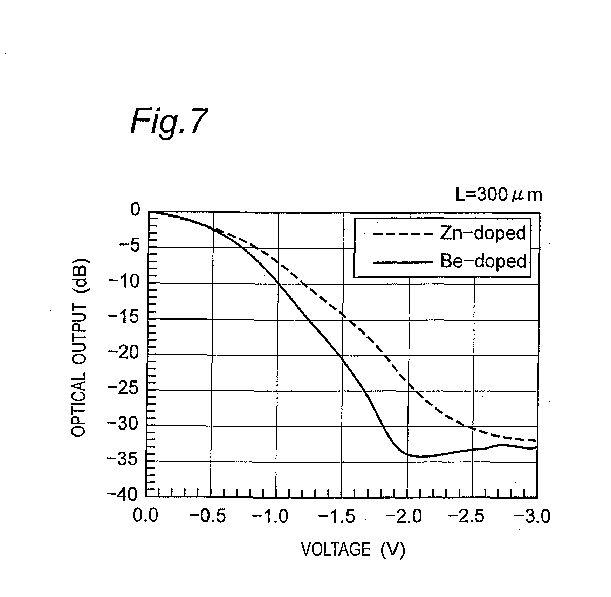

Fig. 7 is a graph of measurement results of extinction ratios in the optical modulator 20 using beryllium as a p-type dopant and in the conventional optical modulator using zinc. The abscissa of the graph indicates a bias voltage, and the ordinate indicates an optical output. When the bias voltage is -2 V, the extinction ratio is -34 dB in the optical modulator 20, and the extinction ratio is -24 dB in the conventional optical modulator. In this manner, in the optical modulator 20, the extinction ratio in the optical modulator 20 can be advantageously made higher than the extinction ratio in the conventional optical modulator by about 40%.

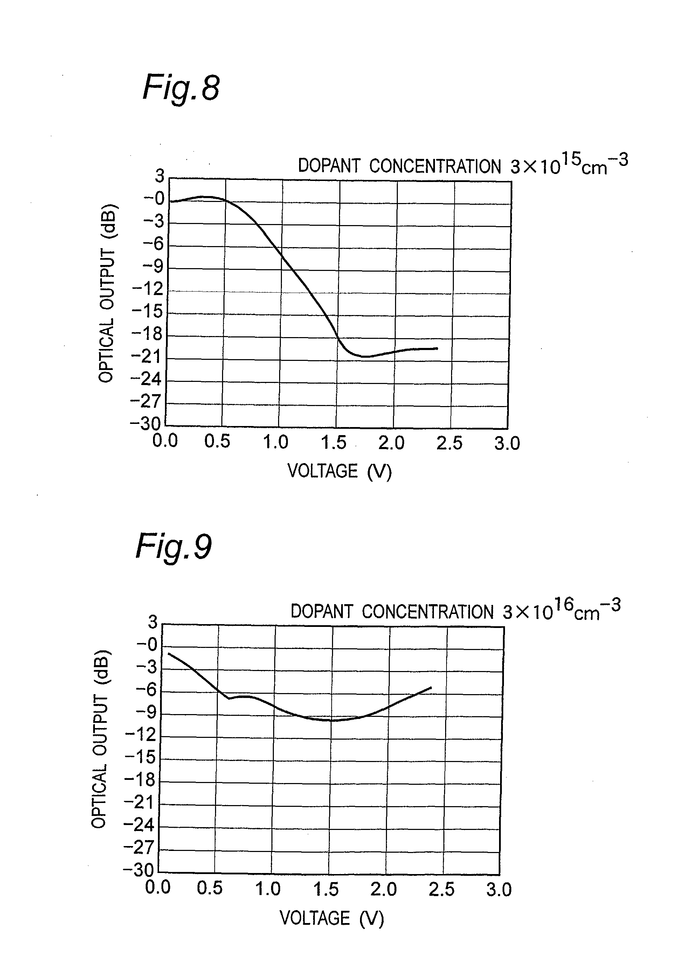

The relationship between an impurity concentration and an extinction ratio characteristic in the i-type absorption layer 4 of the optical modulator 20 will be described below with reference to Figs. 8 and 9. Fig. 8 is a graph of a calculation result of an extinction ratio characteristic obtained when an impurity concentration in the absorption layer is 3 x 10¹⁶ cm⁻³. Fig. 9 is a graph of a calculation result of an extinction ratio characteristic obtained when an impurity concentration in the absorption layer is 3 x 10¹⁵ cm⁻³. The abscissa of the graph indicates a voltage, and the ordinate indicates an optical output. As is apparent from this graph, an impurity concentration in the absorption layer is 3 x 10¹⁶ cm⁻³, a variation in electric field becomes large, and the extinction ratio decreases. On the other hand, as is also apparent from the graph, when the impurity concentration in the absorption layer is 3 x 10¹⁵ cm⁻³, an electric field distribution is almost uniform throughout the absorption layer, and a preferable extinction ratio characteristic can be obtained. As described above, when the impurity concentration in the absorption layer 4 is 10¹⁶ cm⁻³ or less, a preferable extinction ratio can be obtained.

In this case, as an example of the waveguide-type semiconductor optical device, an electric field absorption type optical modulator has been described. However, the waveguide-type semiconductor optical device is not limited to the electric field absorption type optical modulator. In addition, the present invention can also be applied to a semiconductor optical device having a pin-type junction such as an optical switch.

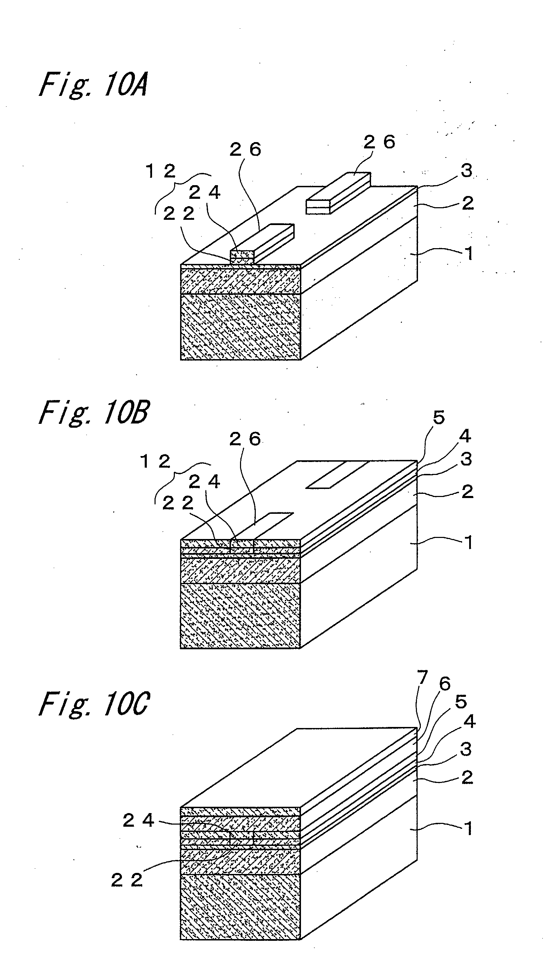

A process of fabricating the optical modulator 20 will be described below with reference to Fig. 10.
(a) The semi-insulating InP substrate 1 is prepared.
(b) Sulfur is added as an n-type dopant, and the n-type cladding layers 2 and 3 are grown on the InP substrate 1 by an organic metal-organic vapor phase epitaxial growth process.
(c) The low-loss waveguide 22 and the undoped layer 24 are grown on the n-type InP cladding layer 3 by the metal-organic vapor phase epitaxial growth process. The low-loss waveguide unit 12 includes the low-loss waveguide 22 and the undoped layer 24.
(d) A portion where the absorption layer 4 is grown is selectively etched by a mask 26, so that the two low-loss waveguide units 12 are formed (Fig. 10A).
(e) By using the metal-organic vapor phase epitaxial growth process, the absorption layer 4 and the undoped layer 5 are grown between the two low-loss waveguide units 12 (Fig. 10B). Thereafter, the mask 26 is removed by etching.
(f) By using the metal-organic vapor phase epitaxial growth process, the p-type cladding layer 6 including beryllium as a p-type dopant and the p-type InGaAs contact layer 7 including beryllium as a p-type dopant are formed (Fig. 10C). In this case, as a material of beryllium,
   bis(cyclopentadienyl)beryllium can be used. Then, as a material of beryllium, not only the above material but also other materials which can be used in the metal-organic vapor phase epitaxial growth process may be used. For example, a material such as bis(cyclopentadienyl)beryllium, dimethyl-beryllium, or diethyl-beryllium can be used.
(g) Thereafter, two grooves and the waveguide mesa 10 interposed between the grooves are formed by the etching process, and the insulating layer 8, the electrode member 16, the p-type side electrode 9, and the n-type side electrode 18 are sequentially formed by the film forming process, and other necessary processes are performed to fabricate the optical modulator 20.

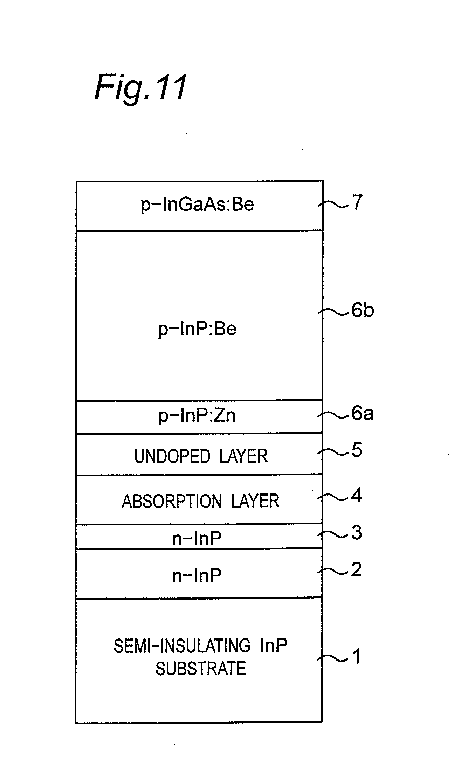

An optical modulator serving as a waveguide-type semiconductor optical device according to the second embodiment of the present invention will be described below with reference to Figs. 11 to 13. Fig. 11 is a schematic sectional view of a layer structure in an optical modulation area 14 of the optical modulator 20. When the optical modulator 20 is compared with the optical modulator according to the first embodiment, the optical modulator 20 is different from the optical modulator according to the first embodiment in that the p-type InP cladding layer 6 includes a first p-type InP cladding layer 6b including beryllium as a p-type dopant and a second p-type InP cladding layer 6a including zinc as a p-type dopant. The second p-type InP cladding layer 6a is sandwiched between the first p-type InP cladding layer 6b and the i-type absorption layer 4. In this manner, the second p-type InP cladding layer 6a including zinc is formed as a part of the p-type InP cladding layer, the entire resistance of the p-type InP layers 6a and 6b can be made smaller than that of the p-type InP layer including only beryllium as a p-type dopant.

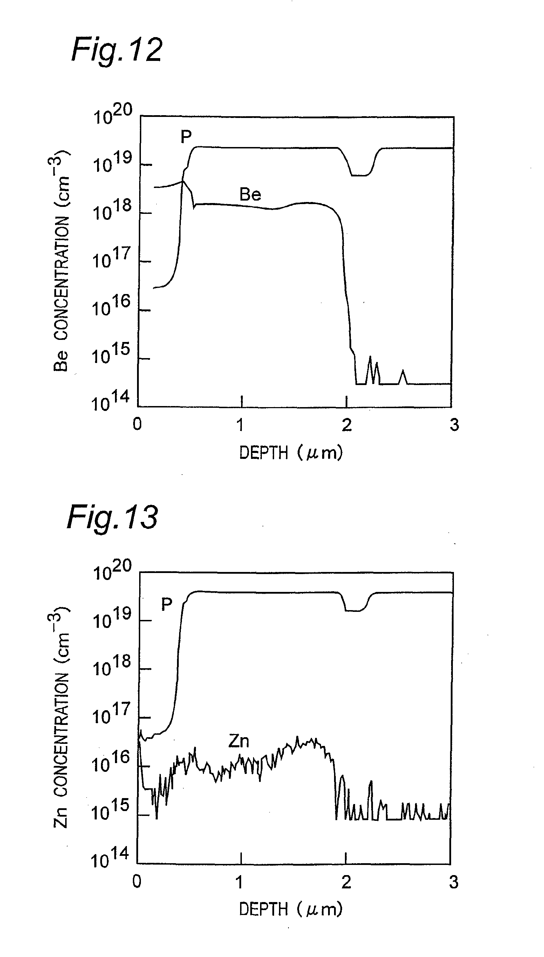

Fig. 12 is a graph of concentration distributions of phosphorous and beryllium, and Fig. 13 is a graph of concentration distributions of phosphorous and zinc. The abscissa of each graph indicates a depth from the surface of a p-type InGaAs contact layer, and the ordinate indicates an element concentration which is expressed as a logarithm. In the two graphs, a change in concentration of phosphorus represents a position of each layer. An area in which a concentration of phosphorous is relatively low at a position having a depth of about 2 µm from the surface is the range of the absorption layer 4. A portion shallower than the absorption layer 4, as described above, the undoped layer 5, the second p-type InP cladding layer 6a including zinc as a p-type dopant, and the first p-type InP cladding layer 6b including beryllium as a p-type dopant are sequentially formed from the deep side. Zinc is diffused from the second InP cladding layer into the first p-type InP cladding layer, and beryllium is diffused from the first p-type InP cladding layer 6b into the second p-type InP cladding layer 6a. More specifically, zinc and beryllium are mutually diffused into the layers including these elements. For this reason, as shown in Fig. 13, zinc is diffused into the first p-type InP cladding layer 6b including beryllium, and the first p-type InP cladding layer includes zinc at a concentration which exceeds 10¹⁶ cm⁻³. On the other hand, zinc is rarely diffused into the absorption layer 4, and the absorption layer 4 includes zinc at a concentration which is lower than 10¹⁶ cm⁻³. The concentrations of zinc and beryllium, i.e., p-type dopant in the absorption layer 4 can be suppressed to 10¹⁶ cm⁻³ or lower, and a preferable extinction ratio characteristic can be obtained.

According to the waveguide-type semiconductor optical device according to the present invention, a p-type dopant such as beryllium having a diffusion coefficient smaller than that of zinc is used as a p-type dopant to be added to the p-type cladding layer of a waveguide-type semiconductor optical device having a pin-type junction. Therefore, an impurity concentration in the i-type absorption layer can be suppressed to 10¹⁶ cm⁻³ or less, and a preferable extinction ratio characteristic can be obtained.

Although the present invention has been described in connection with the preferred embodiments thereof with reference to the accompanying drawings, it is to be noted that various changes and modifications are apparent to those skilled in the art. Such changes and modifications are to be understood as included within the scope of the present invention as defined by the appended claims, unless they depart therefrom.

## Claims

1. A waveguide-type semiconductor optical device (20) having a pin-type junction formed on a semi-insulating substrate (1), the pin-type junction consisting of an n-type cladding layer (2), an i-type absorption layer (4), and a p-type cladding layer (6), wherein an impurity concentration in the i-type absorption layer is not higher than 10¹⁶ cm⁻³.

2. A waveguide-type semiconductor optical device according to claim 1, wherein the p-type cladding layer includes a p-type dopant having a diffusion coefficient smaller than that of zinc.

3. A waveguide-type semiconductor optical device according to claim 1, wherein a p-type dopant in the p-type cladding layer is beryllium.

4. A waveguide-type semiconductor optical device according to claim 1, wherein the p-type cladding layer includes:
a first p-type cladding layer (6b) including a first p-type dopant; and
a second p-type cladding layer (6a) sandwiched between the first p-type cladding layer and the i-type absorption layer, wherein the second p-type cladding layer includes a second p-type dopant having a diffusion coefficient which is higher than that of the first p-type dopant.

5. A process of fabricating a waveguide-type semiconductor optical device having a pin-type junction comprising:
preparing a semi-insulating substrate (1 ); and
forming a pin-type junction including an n-type cladding layer (2), an i-type absorption layer (4), and a p-type cladding layer (6) on the semi-insulating substrate by a metal-organic vapor phase epitaxial growth process,
wherein a p-type dopant having a diffusion coefficient smaller than that of zinc is used as a p-type dopant included in the p-type cladding layer.

6. A process of fabricating a waveguide-type semiconductor optical device according to claim 5, wherein beryllium is used as the p-type dopant, wherein at least one material selected from a group consisting of bis(methylcyclopentadienyl)beryllium, bis(cyclopentadienyl)beryllium, dimethyl-beryllium, and diethyl-beryllium is used in the metal-organic vapor phase epitaxial growth process.
